# EUROPEAN PATENT APPLICATION

(11) **EP 4 169 883 A1**
(43) Date of publication of application: **26.04.2023**
(21) Application number: 21204473.9
(22) Date of filing: 25.10.2021
(51) Int. Cl.: C03B 19/02, C03B 19/06, C03C 17/02, C03C 17/04, B33Y 80/00

(54) **GLASS PRODUCT WITH A HAPTIC STRUCTURE AND MANUFACTURING OF SUCH A GLASS PRODUCT**

(71) Applicant: Continental Automotive Technologies GmbH, 30165 Hannover (DE)
(72) Inventor: Alaribe, Leonard, 60488 Frankfurt am Main (DE)
(74) Representative: Continental Corporation

(57) **Abstract**

The present invention is related to a glass product (1) with a haptic structure (11). The invention is further related to a method, a computer program, and an apparatus for manufacturing such a glass product (1). The glass product (1) comprises a substrate (10) consisting of a glass with a first transition temperature. A haptic structure (11) is located on a surface (12) of the substrate (10). The haptic structure (11) consists of a glass with a second transition temperature that is lower than the first transition temperature.

## Description

The present invention is related to a glass product with a haptic structure. The invention is further related to a method, a computer program, and an apparatus for manufacturing such a glass product.

Displays have become a basic equipment in modern day cars and other traffic areas. With the ever-increasing functionality of displays, it has become important to reduce distractions for the driver during interaction with a display by incorporating finger guides that will let the driver know where their fingers are on the display any time without having to look at the display.

The current state of technology for producing glass products with haptic structures, i.e. 3D structures, is thermal forming. During thermal forming, the glass is heated until the appropriate viscosity for the forming process is reached. This forming method is energy and cost intensive. The main cost adder is the tooling, for example the forms. In addition, large and expensive high temperature equipment is needed.

Other approaches for producing glass products with haptic structures make use of chemical etching or laser engraving of glass surfaces. However, etching or laser engraving to engrave on glass are rather challenging. In addition, both approaches lead to a reduction of the thickness of the glass, which may be challenging for head impact tests as required for automotive applications. Furthermore, over time, grime will be accumulated in the edged or laser engraved tracks.

3D glass printing is gaining ground in the glass industry for rapid prototyping and can also be used in additive manufacturing to create haptic structures on the glass surface. The 3D printer builds up a three-dimensional structure layer by layer on a substrate. The process is controlled by a computer and can print from the solid or liquid state.

In this regard, EP 3 042 751 A1 discloses a printer head for 3D printing of glass. The printer head comprises a heating body made of a refractory metal, a through hole arranged in a central part of the heating body for feeding glass through the heating body, a nozzle arranged on the heating body at an outlet of the through hole, and an induction coil arranged around the heating body and to heat the heating body by way of electromagnetic induction if a HF voltage is applied across the induction coil.

WO 2020/131400 A1 discloses a process for manufacturing a glass article. In the process, a glass or glass-ceramic feature is 3D printed onto a surface of a substrate. A compressive stress region is formed on an outer circumferential surface of the 3D printed glass or glass-ceramic feature.

Glass sintering allows 3D glass structures to be produced on glass or other substrates. Glass powder is compacted using a binder. This works best with a flux liquid as binder. During heating, the glass melts at a lower temperature due to a chemical reaction with the flux binder. The sintering process can form a 3D structure on a glass substrate layer by layer in combination with a pattern.

In this regard, US 8,991,211 B1 discloses a method for producing glass articles of a wide range of geometrical shapes. The glass articles are made by first building the nascent glass article from glass powder and a binder using a three-dimensional printing free-form fabrication process followed by sintering the nascent glass article at a temperature that is hundreds of degrees above the glass powder composition's glass transition temperature while supporting the nascent glass article in a bed of an inert powder having a high flowability.

It is an object of the present invention to provide improved solutions for providing a glass product with a haptic structure.

This object is achieved by a glass product according to claim 1, by a method according to claim 10 for manufacturing a glass product, by a computer program according to claim 14, which implements this method, and by an apparatus according to claim 15.

According to a first aspect, a glass product comprises:
- a substrate consisting of a glass with a first transition temperature; and
- a haptic structure on a surface of the substrate, wherein the haptic structure consists of a glass with a second transition temperature that is lower than the first transition temperature.

According to another aspect, a method for manufacturing a glass product comprises forming a haptic structure on a surface of a substrate, wherein the substrate consists of a glass with a first transition temperature, and wherein the haptic structure consists of a glass with a second transition temperature that is lower than the first transition temperature.

Accordingly, a computer program comprises instructions, which, when executed by at least one processor, cause the at least one processor to control an apparatus for manufacturing a glass product to form a haptic structure on a surface of a substrate, wherein the substrate consists of a glass with a first transition temperature, and wherein the haptic structure consists of a glass with a second transition temperature that is lower than the first transition temperature. For forming the haptic structure, the processor may provide the appropriate instructions to a manufacturing installation.

The term computer has to be understood broadly. In particular, it also includes electronic control units and other processor-based data processing devices.

The computer program code can, for example, be made available for electronic retrieval or stored on a computer-readable storage medium.

According to another aspect, an apparatus for manufacturing a glass product comprises:
- a mount configured to hold a substrate, wherein the substrate consists of a glass with a first transition temperature; and
- a structure forming unit configured to form a haptic structure on a surface of the substrate, wherein the haptic structure consists of a glass with a second transition temperature that is lower than the first transition temperature.

According to the invention, different glass materials are used for the substrate and the haptic structure. The glass used for the haptic structure has a lower transition temperature than the galls used for the substrate. This allows applying the heated glass for the haptic structure directly onto the substrate without melting the substrate. As it is easily possible to apply coatings to the resulting glass product, it is not necessary to change any process steps. All that is needed is an additional process step for applying the haptic structure. In addition, the thickness of the substrate is not reduced, which avoids the problems associated with etching or laser engraving processes.

In an advantageous embodiment, the haptic structure is bonded with the substrate by ion diffusion. For this purpose, the substrate is heated to a temperature that is suitable for ion diffusion between the substrate and the haptic structure. For example, the substrate may be heated to a temperature between 300 °C and 400 °C so that the ions of both glass types can diffuse into each other to establish very strong bonds. The heating preferably occurs while the haptic structure is being applied on the surface of the substrate. In this way, no additional manufacturing step is required. Alternatively, the whole glass product may be heated after the haptic structure has been applied. In this way, the mount for substrate does not need to be provided with means for heating the substrate.

In an advantageous embodiment, the substrate consists of an aluminum silicate glass and the haptic structure consists of a soda lime glass. These types of glass are widely used for manufacturing glass products and are well suited for a variety of applications. Alternatively, a soda lime glass may be used for the substrate. In this case, another glass with a lower transition temperature needs to be used for the haptic structure.

In an advantageous embodiment, the haptic structure is formed by a glass printing process. In this process, a glass melt of glass for the haptic structure is applied directly to the surface of the substrate by a 3D printing head. Preferably, the temperature of the glass melt is between 500 °C and 900 °C. Using a 3D glass printing process has the advantage that a wide range of shapes can be generated without the need for any specific forms. This solution is, therefore, also well suited for rapid prototyping, but also for mass production.

In an advantageous embodiment, the haptic structure is formed by a glass sintering process. As an alternative to glass printing, a sintering process may be used. In this process, a form containing the desired pattern is placed on the substrate and glass powder is filled into the recesses of the pattern. The glass powder is then compacted and heated to its transition temperature, e.g. using a laser or a pointed or extended heat source. Preferably, the glass powder is heated to a temperature between 500 °C and 900 °C. The form is removed either before heating or immediately after the sintering process. Using a sintering process has the advantage that structures may be formed that are difficult to achieve with a 3D glass printing process.

In an advantageous embodiment, the substrate is curved. In this way, the shape of the glass product can be adapted to the specific installation situation where the glass product is used. For example, the shape of the glass product may be such that it matches the shape of the surrounding surfaces.

In an advantageous embodiment, at least one of the substrate and the haptic structure is colored. In this way, the optical appearance of the glass product may be adapted to the specific environment where the glass product is used. By coloring only the haptic structure, the haptic structure may be visually emphasized.

In an advantageous embodiment, the haptic structure forms a finger guide structure, an image magnification structure, or a logo. In addition to a finger guide structure, which is particularly advantageous for applications where a user distraction shall be reduced, the described solutions are likewise suitable for forming other types of haptic structures. For example, a lens with desired optical properties may easily be formed on the substrate, which may be used for magnifying an area located below the lens. In addition, the haptic structure may be applied to the glass product for design purpose, e.g. for providing the glass product with a logo.

In an advantageous embodiment, the glass product is a display cover glass. In many applications, touch displays are provided for user interaction. Depending on the application, it may be desirable to reduce user distraction caused by the interaction with the display. Haptic guiding structures are particularly suited for this purpose, as they will let the driver know where their fingers are on the display any time without having to look at the display.

Advantageously, a display, in particular a display for automotive applications, is provided with a display cover glass manufactured in accordance with the invention. By providing the display cover glass with a suitable finger guiding haptic structure, distractions for the driver during interaction with the display are reduced. Of course, such a display may likewise be used in other means of transportation as well as in other applications, such as mobile devices or vending machines. Further features of the present invention will become apparent from the following description and the appended claims in conjunction with the figures.

### Figures

- Fig. 1: schematically illustrates a glass product according to the invention;
- Fig. 2: schematically illustrates a method for manufacturing a glass product;
- Fig. 3: schematically illustrates a first embodiment of an apparatus for manufacturing a glass product;
- Fig. 4: schematically illustrates a second embodiment of an apparatus for manufacturing a glass product;
- Fig. 5: schematically illustrates a glass printing process for manufacturing a glass product; and
- Fig. 6: schematically illustrates a glass sintering process for manufacturing a glass product.

### Detailed description

The present description illustrates the principles of the present disclosure. It will thus be appreciated that those skilled in the art will be able to devise various arrangements that, although not explicitly described or shown herein, embody the principles of the disclosure.

All examples and conditional language recited herein are intended for educational purposes to aid the reader in understanding the principles of the disclosure and the concepts contributed by the inventor to furthering the art and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the diagrams presented herein represent conceptual views of illustrative circuitry embodying the principles of the disclosure.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, systems on a chip, microcontrollers, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a combination of circuit elements that performs that function or software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

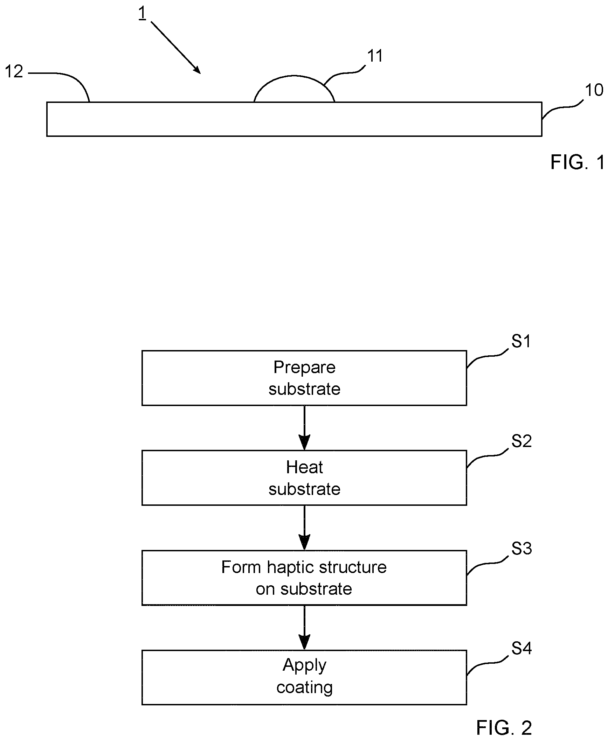

Fig. 1 schematically illustrates a glass product 1 according to the invention. For example, the glass product 1 may be a display cover glass. The glass product 1 comprises a substrate 10 consisting of a glass with a first transition temperature, e.g. an aluminum silicate glass. A haptic structure 11 is located on a surface 12 of the substrate 10. For example, the haptic structure 11 may form a finger guide structure, an image magnification structure, or a logo. The haptic structure 11 consists of a glass with a second transition temperature that is lower than the first transition temperature, e.g. a soda lime glass. The haptic structure 11 is formed by a glass printing process or a glass sintering process and is preferably bonded with the substrate 10 by ion diffusion. In the example in Fig. 1, the substrate 10 is flat. Of course, the substrate 10 may likewise be curved. In addition, the substrate 10 or the haptic structure 11 may be colored.

Fig. 2 schematically illustrates a method according to the invention for manufacturing a glass product. In a first step S1, a substrate is prepared. The substrate consists of a glass with a first transition temperature. Preparing S1 the substrate may include cutting the substrate to a desired size, grinding edges of the substrate, or warping the substrate. In order to prevent a thermal shock during a subsequent structure forming process, the substrate is preferably heated S2. A haptic structure is then formed S3 on the substrate. For this purpose, a glass printing process or a glass sintering process is used. The haptic structure consists of a glass with a second transition temperature that is lower than the first transition temperature. The heating of the substrate S2 may further be used to enable ion diffusion between the substrate and the haptic structure. For example, the substrate may be heated S2 to a temperature between 300 °C and 400 °C so that the ions of both glass types can diffuse into each other to establish very strong bonds. Finally, one or more coatings may be applied S4 to the glass product, e.g. hard coats, antireflection coatings or the like. While ion diffusion preferably occurs while the haptic structure is being applied on the surface of the substrate, according to an alternative solution, the whole glass product may be heated for this purpose after the haptic structure has been applied.

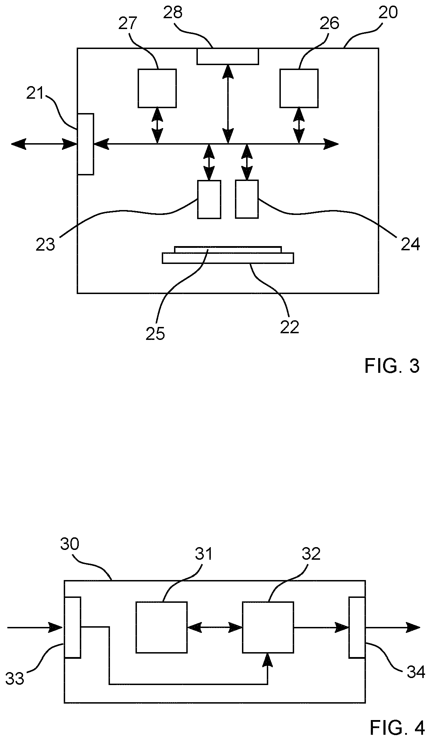

Fig. 3 schematically illustrates a block diagram of a first embodiment of an apparatus 20 according to the invention for manufacturing a glass product. The apparatus 20 has an interface 21, via which information about a glass product to be manufactured may be received. The apparatus 20 further has a mount 22 for accommodating a substrate. The substrate consists of a glass with a first transition temperature. A structure forming unit 23 is provided for forming a haptic structure on a surface of the substrate. The haptic structure consists of a glass with a second transition temperature that is lower than the first transition temperature. The structure forming unit 23 implements a glass printing process or a glass sintering process. The apparatus 20 may further comprise a coating unit 24 for applying one or more coatings to the glass product and a heating unit 25 for heating the substrate. A local storage unit 27 may be provided for storing data during processing. Information about a status of the various units may be made available via the interface 21.

The structure forming unit 23, the coating unit 24, and the heating unit 25 may be controlled by a control module 26. A user interface 28 may be provided for enabling a user to modify settings of the structure forming unit 23, the coating unit 24, the heating unit 25, and the control module 26. The control module 26 can be embodied as a dedicated hardware unit. Of course, it may likewise be implemented as software running on a processor, e.g. a CPU or a GPU.

A block diagram of a second embodiment of an apparatus 30 according to the invention for manufacturing a glass product is illustrated in Fig. 4. The apparatus 30 comprises a processing device 32 and a memory device 31. For example, the apparatus 30 may be a computer, an electronic control unit or an embedded system. The memory device 31 has stored instructions that, when executed by the processing device 32, cause the apparatus 30 to perform steps according to one of the described methods. The instructions stored in the memory device 31 thus tangibly embody a program of instructions executable by the processing device 32 to perform program steps as described herein according to the present principles. The apparatus 30 has an input 33 for receiving data. Data generated by the processing device 32 are provided via an output 34 to a manufacturing installation for manufacturing the glass product. In addition, such data may be stored in the memory device 31. The input 33 and the output 34 may be combined into a single bidirectional interface.

The processing device 32 as used herein may include one or more processing units, such as microprocessors, digital signal processors, or a combination thereof.

The local storage unit 27 and the memory device 31 may include volatile and/or non-volatile memory regions and storage devices such as hard disk drives, optical drives, and/or solid-state memories.

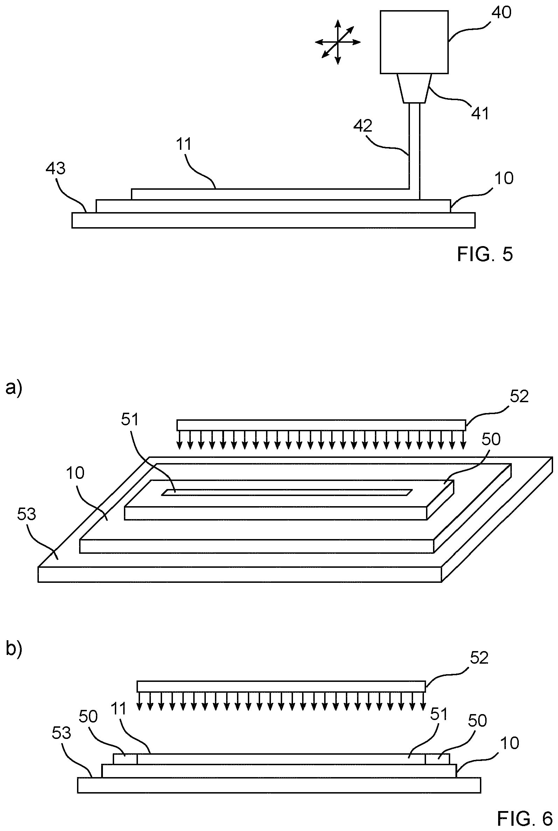

Fig. 5 schematically illustrates a glass printing process for manufacturing a glass product. The process makes use of a heated 3D glass printing head 40 containing a glass melt 42 for forming a haptic structure 11 on a substrate 10. Preferably, the temperature of the glass melt 42 is between 500 °C and 900 °C. The printing head 40 is movable in three directions and comprises a nozzle 41 for dosing the glass melt 42. The glass melt 42 is applied to a surface of the substrate 10, where it cools down until the glass is solidified. A heating base 43 may be provided for heating the substrate 10. On the one hand, the heating of the substrate 10 prevents a thermal shock during the printing process. On the other hand, the heating may enable ion diffusion between the substrate 10 and the haptic structure 11. For example, the substrate 10 may be heated to a temperature between 300 °C and 400 °C so that the ions of both glass types can diffuse into each other to establish very strong bonds.

Fig. 6 schematically illustrates a glass sintering process for manufacturing a glass product. Fig. 6a) shows a top view, Fig. 6b) a side view. A form 50 containing the desired pattern is placed on a substrate 10. Glass powder 51 is filled into the recesses of the pattern. The glass powder 51 is then compacted and heated to its transition temperature by a heat source 52. In the example of Fig. 6, the heat source 52 is an extended heat source. Of course, it may likewise be a laser or a pointed heat source, which scans the glass powder 51. Preferably, the glass powder 51 is heated to a temperature between 500 °C and 900 °C. The form 50 is removed either before heating or immediately after the sintering process. A heating base 53 may be provided for heating the substrate 10. On the one hand, the heating of the substrate 10 prevents a thermal shock during the sintering process. On the other hand, the heating may enable ion diffusion between the substrate 10 and the haptic structure 11. For example, the substrate 10 may be heated to a temperature between 300 °C and 400 °C so that the ions of both glass types can diffuse into each other to establish very strong bonds.

### Reference numerals

- 1: Glass product
- 10: Substrate
- 11: Haptic structure
- 12: Surface
- 20: Apparatus
- 21: Interface
- 22: Mount
- 23: Structure forming unit
- 24: Coating unit
- 25: Heating unit
- 26: Control module
- 27: Local storage unit
- 28: User interface
- 30: Apparatus
- 31: Memory device
- 32: Processing device
- 33: Input
- 34: Output
- 40: Printing head
- 41: Nozzle
- 42: Glass melt
- 43: Heating base
- 50: Form
- 51: Glass powder
- 52: Heat source
- 53: Heating base

- S1: Prepare substrate
- S2: Heat substrate
- S3: Form haptic structure on substrate
- S4: Apply coating

## Claims

1. A glass product (1) comprising:
- a substrate (10) consisting of a glass with a first transition temperature; and
- a haptic structure (11) on a surface (12) of the substrate (10), wherein the haptic structure (11) consists of a glass with a second transition temperature that is lower than the first transition temperature.

2. The glass product (1) of claim 1, wherein the haptic structure (11) is bonded with the substrate (10) by ion diffusion.

3. The glass product (1) of claim 1 or 2, wherein the substrate (10) consists of an aluminum silicate glass and the haptic structure (11) consists of a soda lime glass.

4. The glass product (1) of any of claims 1 to 3, wherein the haptic structure (11) is formed (S3) by a glass printing process.

5. The glass product (1) of any of claims 1 to 3, wherein the haptic structure (11) is formed (S3) by a glass sintering process.

6. The glass product (1) of any of the preceding claims, wherein the substrate (10) is curved.

7. The glass product (1) of any of the preceding claims, wherein at least one of the substrate (10) and the haptic structure (11) is colored.

8. The glass product (1) of any of the preceding claims, wherein the haptic structure (11) forms a finger guide structure, an image magnification structure, or a logo.

9. The glass product (1) of any of the preceding claims, wherein the glass product (1) is a display cover glass.

10. A method for manufacturing a glass product (1), the method comprising forming (S3) a haptic structure (11) on a surface (12) of a substrate (10), wherein the substrate (10) consists of a glass with a first transition temperature, and wherein the haptic structure (11) consists of a glass with a second transition temperature that is lower than the first transition temperature.

11. The method according to claim 10, further comprising heating (S2) the substrate (10) to a temperature that is suitable for ion diffusion between the substrate (10) and the haptic structure (11).

12. The method according to claim 10 or 11, wherein the haptic structure (11) is formed (S3) by a glass printing process.

13. The method according to claim 10 or 11, wherein the haptic structure (11) is formed (S3) by a glass sintering process.

14. A computer program comprising instructions, which, when executed by at least one processor, cause the at least one processor to perform a method according to any of claims 10 to 13 for manufacturing a glass product (1).

15. An apparatus (20) for manufacturing a glass product (1), the apparatus (20) comprising:
- a mount (22) configured to hold a substrate (10), wherein the substrate (10) consists of a glass with a first transition temperature; and
- a structure forming unit (23) configured to form (S3) a haptic structure (11) on a surface (12) of the substrate (10), wherein the haptic structure (11) consists of a glass with a second transition temperature that is lower than the first transition temperature.
